Europäisches Patentamt

(19) European Patent Office

Office européen des brevets

(11) Publication number: **0 083 304**
**B1**

(12) EUROPEAN PATENT SPECIFICATION

(45) Date of publication of patent specification: **18.03.87**

(51) Int. Cl.⁴: **B 23 P 21/00, B 23 Q 39/04**

(21) Application number: **82810547.8**

(22) Date of filing: **17.12.82**

(54) **Machine with an intermittently rotating table for working and assembly of high-precision parts.**

(30) Priority: **28.12.81 CH 8302/81**
**29.12.81 CH 8319/81**

(43) Date of publication of application:
**06.07.83 Bulletin 83/27**

(45) Publication of the grant of the patent:
**18.03.87 Bulletin 87/12**

(84) Designated Contracting States:
**AT BE CH DE FR GB IT LI LU NL SE**

(56) References cited:
**DE-A-1 956 429**
**DE-B-1 258 707**
**DE-C- 921 609**
**FR-A-2 092 183**
**FR-A-2 391 808**
**US-A-1 825 971**

(73) Proprietor: **Azypatent AG**
**FL-9490 Vaduz (LI)**

(72) Inventor: **Gippa, Michelangelo c/o Dr. Arno**
**Ballinari**
**Corso San Gottardo 12**
**CH-6830 Chiasso (CH)**

(74) Representative: **Baggiolini, Raimondo et al**
**Racheli & Fiammenghi Via San Gottardo 15**
**CH-6900 Lugano (CH)**

Courier Press, Leamington Spa, England.

## Description

This invention concerns a machine with an intermittently rotating table for working and assembly of high-precision parts in three axes.

Machines with an intermittently rotating table for working and assembly of high-precision parts, such as electrical contacts, small metal parts, points of ball point pens, etc., are known.

The FR—A—2 092 183 patent relates to a machine comprising operating units placed above, below and laterally to the rotary table, control of the feed of the work units occurring by the central shaft, coaxial with the rotary table.

The machine according to the present invention differs from known ones by the fact that it makes it possible to give to the operating units any feed and return characteristic as occurs in machines with rotary cams, while having very simplified kinematics and working in three different axes.

Further, since the control organs are in the center of the machine, it offers a complete accessibility to the tools and the parts to be worked.

The machine is characterized by the characterizing part of claim 1.

The accompanying drawings represent a preferred nonlimiting embodiment of the machine in question that allows working and assembly of small parts in three axes.

Fig. 1 represents the axial section of the machine according to the embodiment, in which the various work units are controlled simultaneously.

Fig. 2 represents the axial section of a lateral station of the machine of Fig. 1.

Fig. 3 shows some details on an enlarged scale.

Fig. 4 and 5 represent a particular embodiment of the maltese cross device that controls the intermittent movement of the part-carrying table.

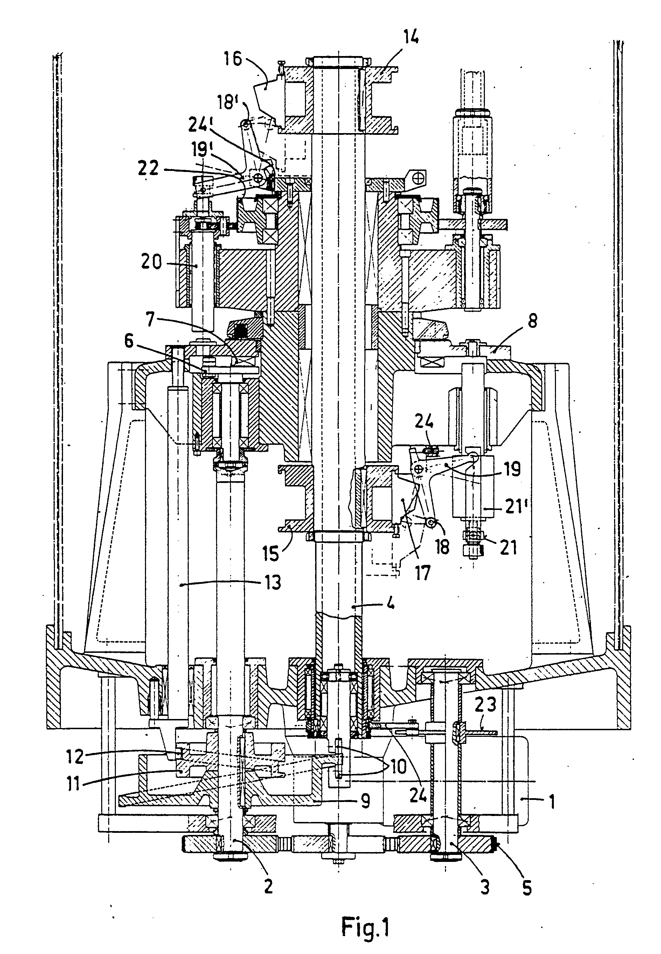

With reference to Figs. 1, 2, 3, the movement is supplied by motor 1 (Fig. 1) which transmits it to auxiliary shafts 2 and 3 parallel to central shaft 4, by reducer and toothed belt 5.

Auxiliary shaft 2 controls maltese cross device 6, 7, which changes the continuous movement into an intermittent movement for driving table 8.

To the base of auxiliary shaft 2 is fastened drum cam 9 which, by acting on rollers 10, causes the axial movement of central shaft 4. Also to auxiliary shaft 2 is fastened another drum cam 11 that controls indexing of table 8 by rollers 12 and rod 13.

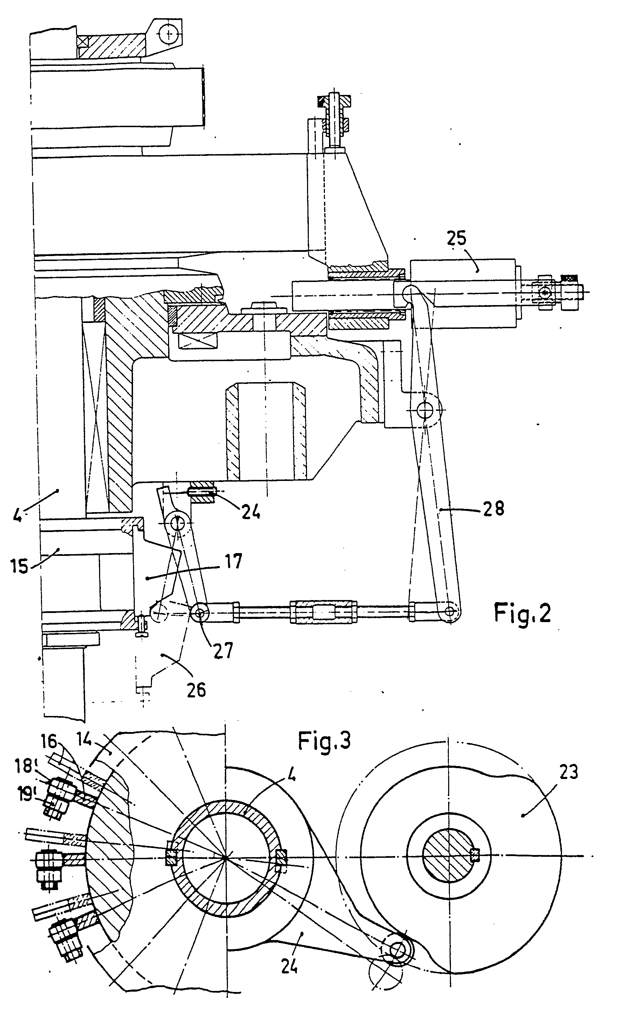

To both ends of central shaft 4 are fastened cylindrical bodies 14 and 15 on which are secured radial linear cams 16—17 (see also Fig. 3). These cams, by rollers 18, 18' and levers 19, 19', control the movement of operating units 20—21.

The operating units can receive the rotary movement from a central wheel 22 or an independent small motor 21'.

During work time, central shaft 4 makes a downward movement and in this phase cams 16—17 are in contact with rollers 18, 18' of levers 19, 19' which control the movement of operating units 20, 21.

At the end of this period operating units 20, 21 are in starting position.

At this point, simultaneously with the rotation of table 8, central shaft 4 is turned a certain angle by cam 23 (fastened to auxiliary shaft 3) and lever 24. At this moment, linear cams 16—17 are no longer in contact with rollers 18, 18' and therefore no longer control the operating units (20, 21) and return of central shaft 4 occurs without influencing the operating units themselves. When return has occurred, central shaft 4 is rotated to its starting position. Return and rotation of central shaft 4 occur in idle times, i.e., during the rotation and indexing of table 8. During rotation and return of central shaft 4, levers 19, 19' rest on stops 24, 24'.

Fig. 2 shows on a larger scale an axial section of the control organs of a lateral station 25.

Operating unit 25 receives the feed control from linear cam 26 by roller 27 and lever arrangement 28.

Fig. 3 shows, for greater clarity, in plan view, in the right half, elements 23, 24 located in the lower part of the machine that control central shaft 4, and in the left half, elements 16, 18', 19' located in the upper part of the machine itself and which control the axial movements of operating units 20.

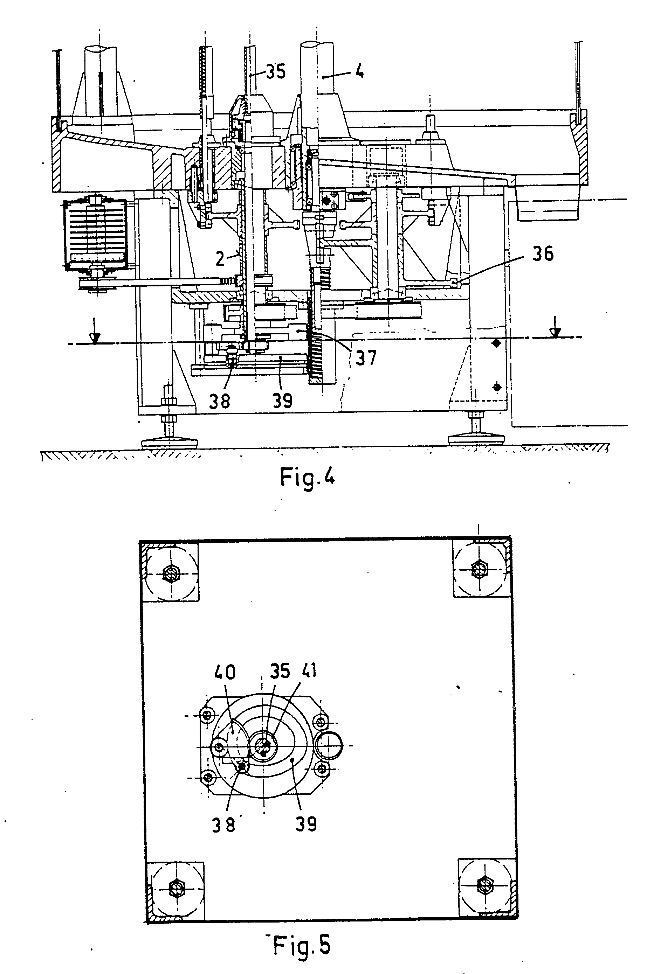

Figs. 4 and 5 represent a particular embodiment of the maltese cross device.

The maltese cross, as is known, is a very simple mechanism for generating an intermittent movement from a continuous rotary movement.

The disadvantage is that the law of translation is fixed, i.e., it depends only on its angular subdivision. The mechanism described here makes it possible to eliminate this drawback and reduce the angle of rotation necessary for indexing and also to modify the characteristic of the movement itself.

Functioning is as follows: the continuous rotary movement of shaft 2 is transmitted from body 37 by toothed segment 40 and cogwheel 41 to shaft 35 coaxial with shaft 2.

Toothed segment 40 carries roller 38 that in turn is guided by cam 39. Cam 39 has such a geometry that during translation of the table it accelerates toothed segment 40, thus superposing a relative rotary movement on cogwheel 41 and therefore on shaft 35 which controls the maltese cross device.

Thus, it is possible to reduce the angle necessary for translation of the rotary table and the law of translation can also be corrected to obtain a constant acceleration, for example.

## Claims

1. Machine with intermittently rotary table (8) for working and assembly of high-precision parts, comprising operating units placed above, below and laterally to the rotary table, control of the feed of the work units effected by a central shaft (4), coaxial with the rotary table, characterized in that said central shaft (4) during a work cycle, makes an axial movement, transmitting the feed and return movement to the operating units (20, 21, 25) by radial linear cams (16, 17) while during an idle time, i.e., the time used to index the rotary table (8), said central shaft is rotated angularly so that the radial linear cams (16, 17) do not contact said operating units (20, 21, 25) and in this position return of the central shaft (4) to its initial position is performed without influencing said operating units; control of the feed of the various working units being able to occur simultaneously for all units or groups of units or independently of one another.

2. Machine as in claim 1, wherein a rotary movement is imparted to the operating units (20, 21, 25) by a central wheel (22) or independent motors (21').

3. Machine as in claims 1 or 2, wherein a motor (1) transmits the rotary movements to two auxiliary shafts (2, 3), parallel to the central shaft (4) by a reducer (5); one of said auxiliary shafts (2) controlling a maltese cross device (6, 7) that transforms the continuous rotary movement into an intermittent movement to drive the rotary table (8); there being fastened to the base of said auxiliary shaft (2) a drum cam (9) which, acting on rollers (10) causes the axial movement of the central shaft (4); there also being fastened to said auxiliary shaft (2) a second drum cam (11) that controls the locking between indexing of the rotary table (8).

4. Machine as in claim 3 wherein at respective ends of the central shaft (4) are placed two cylindrical bodies (14 and 15) on which are radially fastened the linear cams (16, 17), which, by rollers (18, 18') and levers (19, 19') control the movement of the operating units (20, 21, 25); the whole being so designed that during work time of the operating units (20, 21) the central shaft (4) makes a downward movement, while during rotation of the rotary table (8), the shaft is rotated a certain angle by a cam (23) fastened to the other auxiliary shaft (3), so that said radial linear cams (16, 17) are no longer in contact with said rollers (18, 18') and therefore no longer control the operating units (20, 21, 25), and the return of the central shaft (4) occurs without influencing the operating units themselves; when the return has occurred, said central shaft (4) is rotated angularly to the starting position so that the return and rotation of said central shaft occurs in idle times, i.e., during the indexing of said rotary table (8).

5. Machine as in claim 3, wherein the maltese cross is controlled by a device comprising a rotary body (37), which in turn is controlled by said auxiliary shaft (2) and by a toothed segment (40) solid with a roller (38) which engages in a stationary cam (39); said toothed segment (40) fitting with a cogwheel (41) solid with the shaft carrying said maltese cross (35).

**Patentansprüche**

1. Maschine mit einem intermittierend drehenden Tisch (8) zur Bearbeitung und zum Zusammenbau von Teilen mit hoher Präzision, die oberhalb, unterhalb sowie seitlich des Drehtisches angeordnete Arbeitseinheiten umfaßt, deren Vorschub durch eine mit dem Drehtisch koaxiale Zentralwelle (4) gesteuert wird, dadurch gekennzeichnet, daß die Zentralwelle (4) während eines Arbeitszyklus eine axiale Bewegung ausführt, wobei die Vorschub- und Rückstellbewegung durch radiale, geradlinige Steuerdaumen (16, 17) auf die Arbeitseinheiten (20, 21, 25) übertragen wird, während in einer Leerzeit, d.h. in der zum Schalten des Drehtisches (8) verwendeten Zeit, die Zentralwelle in einer Winkelrichtung gedreht wird, so daß die radialen, geradlinigen Steuerdaumen (16, 17) mit den Arbeitseinheiten (20, 21, 25) nicht in Anlage sind und in dieser Lage eine Rückkehr der Zentralwelle (4) in ihre Ausgangsstellung ohne eine Beeinflussung der Arbeitseinheiten ausgeführt wird, wobei die Vorschubsteuerung der verschiedenen Arbeitseinheiten gleichzeitig für alle Einheiten oder Gruppen von Einheiten oder unabhängig voneinander ausführbar ist.

2. Maschine nach Anspruch 1, dadurch gekennzeichnet, daß den Arbeitseinheiten (20, 21, 25) eine Drehbewegung durch ein Zentralrad (22) oder unabhängige Motoren (21') vermittelt wird.

3. Maschine nach Anspruch 1 oder 2, dadurch gekennzeichnet, daß ein Motor (1) die Drehbewegung auf zwei zur Zentralwelle (4) parallele Hilfswellen (2, 3) durch eine Untersetzung (5) überträgt, daß eine der Hilfswellen (2) eine Malteserkreuzvorrichtung (6, 7) steuert, die eine kontinuierliche Drehbewegung in eine intermittierende Bewegung zum Antrieb des Drehtisches (8) umsetzt, daß um unteren Teil der Hilfswelle (2) eine durch Einwirken auf Rollen (10) die axiale Bewegung der Zentralwelle (4) hervorrufende Kurventrommel (9) befestigt ist und daß an der Hilfswelle (2) noch eine zweite Kurventrommel (11) befestigt ist, die die Verriegelung zwischen Schaltbewegungen des Drehtisches (8) steuert.

4. Maschine nach Anspruch 3, dadurch gekennzeichnet, daß an den jeweiligen Enden der Zentralwelle (4) je ein Zylinderkörper (14, 15) angeordnet ist, an welchen radial die geradlinigen Steuerdaumen (16, 17), die über Rollen (18, 18') sowie Hebel (19, 19') die Bewegung der Arbeitseinheiten (20, 21, 25) steuern, befestigt sind, und daß die Gesamtheit derart ausgelegt ist, daß während einer Arbeitszeit der Arbeitseinheiten (20, 21) die Zentralwelle (4) eine Abwärtsbewegung ausführt, während die Welle in der Zeit einer Drehung des Drehtisches (8) durch einen an der anderen Hilfswelle (3) befestigten Nocken (23) um einen bestimmten Winkel gedreht wird, so daß die radialen, geradlinigen Steuerdaumen (16, 17) nicht länger mit den Rollen (18, 18') in Berührung sind und deshalb die Arbeitseinheiten (20, 21, 25) nicht länger steuern, und daß die Rückkehr der Zentralwelle (4) ohne eine Beeinflussung der Arbeitseinheiten selbst erfolgt, wobei bei erfolgter Rückkehr die Zentralwelle (4) in der Winkelrichtung in die Ausgangsstellung gedreht wird, so daß die Rückkehr und die Drehung der Zentralwelle in Leerzeiten, d.h. während des Schaltens des Drehtisches, abläuft.

5. Maschine nach Anspruch 3, dadurch gekennzeichnet, daß das Malteserkreuz durch einen Drehkörper (37) gesteuert wird, der seinerseits durch die Hilfswelle (2) sowie ein Zahnsegment

(40), an dem eine mit einer ortsfesten Steuerkurve (39) in Eingriff befindliche Rolle (38) fest ist, gesteuert wird, und daß das Zahnsegment (40) mit einem auf der das Malteserkreuz tragenden Welle (35) festen Zahnrad (41) kämmt.

## Revendications

1. Machine à table (8) tournant d'un mouvement intermittent pour travailler et assembler des éléments de haute précision, comprenant des ensembles de travail placés au-dessus, au-dessous et latéralement par rapport à la table tournante, une commande de l'avance des ensembles de travail effectuée par un arbre central (4) coaxial à la table tournante, caractérisée en ce que ledit arbre central (4) pendant un cycle de travail accomplit un mouvement axial transmettant les mouvements d'avance et de retour aux ensembles de travail (20, 21, 25) par des cames linéaires radiales (16, 17) tandis que pendant un temps mort, c'est-à-dire un temps utilisé pour l'indexage de la table tournante (8), le dit arbre central tourne angulairement de façon que les cames linéaires radiales (16, 17) ne viennent pas au contact desdits ensembles de travail (20, 21, 25) et que dans cette position, le retour de l'arbre central (4) à sa position initiale soit accompli sans influencer lesdits ensembles de travail; la commande de l'avance desdits divers ensembles de travail étant capable de s'effectuer simultanément pour tous les ensembles ou groupes d'ensembles ou indépendamment les uns des autres.

2. Machine selon la revendication 1, dans laquelle un mouvement de rotation est communiqué aux ensembles de travail (20, 21, 25) par une roue centrale (22) ou par des moteurs indépendants (21').

3. Machine selon la revendication 1 ou 2, dans laquelle un moteur (1) transmet les mouvements de rotation à deux arbres auxiliaires (2, 3) parallèles à l'arbre central (4) par un réducteur (5); l'un desdits arbres auxiliaires (2) commandant un dispositif à croix de Malte (6, 7) qui transforme le mouvement de rotation continu en un mouvement intermittent pour entraîner la table tournante (8); tandis qu'à la base dudit arbre auxiliaire (2) est fixée une came en tambour (9) qui, en agissant sur des galets (10), entraîne le mouvement axial de l'arbre central (4) et qu'audit arbre auxiliaire (2) est fixée une seconde came à tambour (11) qui commande le verrouillage entre les indexages de la table tournante (8).

4. Machine selon la revendication 3 dans laquelle aux extrémités respectives de l'arbre central (4) sont placés deux corps cylindriques (14 et 15) sur lesquels sont fixées radialement les cames linéaires (16, 17) qui, par des galets (18, 18') et des leviers (19, 19') commandant le mouvement des ensembles de travail (20, 21, 25); le tout étant établi de façon que, pendant le temps de travail des ensembles de travail (20, 21), l'arbre central (4) fasse un mouvement vers le bas tandis que, pendant la rotation de la table tournante (8), l'arbre tourne d'un certain angle sous l'action d'une came (23) fixée à l'autre arbre auxiliaire (3) de façon que lesdites cames linéaires radiales (16, 17) ne soient plus en contact avec lesdits galets (18, 18') et par suite ne commandent plus les ensembles de travail (20, 21, 25) et que le retour de l'arbre central (4) s'effectue sans influencer les ensembles de travail eux-mêmes; quand le retour a été effectué, ledit arbre central (4) étant entraîné en rotation jusqu'à la position de départ de façon que le retour et la rotation dudit arbre central s'effectuent dans des temps morts, c'est-à-dire pendant l'indexage de ladite table tournante (8).

5. Machine selon la revendication 3, dans laquelle la croix de Malte est commandée par un dispositif comprenant un corps tournant (37) qui à son tour est commandé par ledit arbre auxiliaire (2) et par un segment denté (40) solidaire d'un galet (38) qui coopère avec une came stationnaire (39); ledit segment denté (40) coopérant avec une roue dentée (41) solidaire de l'arbre portant ladite croix de Malte (35).

Fig.1

0 083 304

Fig.2

Fig.3

Fig.4

Fig.5